# EUROPEAN PATENT SPECIFICATION

(11) **EP 2 632 711 B1**
(45) Date of publication and mention of the grant of the patent: **15.05.2019**
(21) Application number: 11781921.9
(22) Date of filing: 27.10.2011
(51) Int. Cl.: B32B 27/12, B32B 27/34, B32B 5/02, B32B 5/26, C08J 5/04, C08K 7/20, C08L 77/06

(54) **POLYAMIDE COMPOSITE STRUCTURES AND PROCESSES FOR THEIR PREPARATION**
POLYAMIDVERBUNDSTRUKTUREN UND VERFAHREN ZU IHRER HERSTELLUNG
STRUCTURES COMPOSITES DE POLYAMIDES ET LEURS PROCÉDÉS DE PRÉPARATION

(30) Priority: 04.11.2010 US 410108 P; 04.11.2010 US 410104 P; 04.11.2010 US 410100 P; 04.11.2010 US 410093 P; 29.10.2010 US 408166 P
(43) Date of publication of application: 04.09.2013
(73) Proprietor: E. I. du Pont de Nemours and Company, Wilmington, DE 19898 (US)
(72) Inventor: YUAN, Shengmei, Newark DE 19711 (US); ELIA, Andri, E., Chadds Ford PA 19317 (US); KIRCHNER, Olaf, Norbert, CH-1272 Genolier (CH); WAKEMAN, Martyn, Douglas, CH-1196 Gland (CH)
(74) Representative: Dannenberger, Oliver Andre
(86) International application number: PCT/US2011/057951
(87) International publication number: WO 2012/058350

(56) References cited:
- WO-A1-2007/149300
- WO-A1-2010/081871
- WO-A1-2010/081873
- US-A1- 2006 036 044

## Description

### FIELD OF THE INVENTION

The present invention relates to the field of composite structures and processes for their preparation, particularly it relates to the field of polyamide composite structures.

### BACKGROUND OF THE INVENTION

With the aim of replacing metal parts for weight saving and cost reduction while having comparable or superior mechanical performance, structures based on composite materials comprising a polymer matrix containing a fibrous material have been developed. With this growing interest, fiber reinforced plastic composite structures have been designed because of their excellent physical properties resulting from the combination of the fibrous material and the polymer matrix and are used in various end-use applications. Manufacturing techniques have been developed for improving the impregnation of the fibrous material with a polymer matrix to optimize the properties of the composite structure.
In highly demanding applications, such as for example structural parts in automotive and aerospace applications, composite materials are desired due to a unique combination of lightweight, high strength and temperature resistance.

High performance composite structures can be obtained using thermosetting resins or thermoplastic resins as the polymer matrix. Thermoplastic-based composite structures present several advantages over thermoset-based composite structures such as, for example, the fact that they can be post-formed or reprocessed by the application of heat and pressure, that a reduced time is needed to make the composite structures because no curing step is required, and their increased potential for recycling. Indeed, the time consuming chemical reaction of cross-linking for thermosetting resins (curing) is not required during the processing of thermoplastics. Among thermoplastic resins, polyamides are particularly well suited for manufacturing composite structures. Thermoplastic polyamide compositions are desirable for use in a wide range of applications including parts used in automobiles, electrical/electronic parts, household appliances and furniture because of their good mechanical properties, heat resistance, impact resistance and chemical resistance and because they may be conveniently and flexibly molded into a variety of articles of varying degrees of complexity and intricacy.

US 4,255,219 discloses a thermoplastic sheet material useful in forming composites. The disclosed thermoplastic sheet material is made of polyamide 6 and a dibasic carboxylic acid or anhydride or esters thereof and at least one reinforcing mat of long glass fibers encased within said layer.

For making integrated composite structures and to increase the performance of polymers, it is often desired to "overmold" one or more parts made of a polymer onto a portion or all of the surfaces of a composite structure so as to surround or encapsulate said surfaces. Overmolding involves shaping, e.g. by injection molding, a second polymer part directly onto at least a portion of one or more surfaces of the composite structure, to form a two-part composite structure, wherein the two parts are adhered one to the other at least at one interface. The polymer compositions used to impregnate the fibrous material (i.e. the matrix polymer composition) and the polymer compositions used to overmold the impregnated fibrous material (i.e. the overmolding polymer composition) are desired to have good adhesion one to the other, good dimensional stability, and to retain their mechanical properties under adverse conditions, including thermal cycling, so that the composite structure is protected under operating conditions and thus has a reasonable lifetime.

Unfortunately, conventional thermoplastic polyamide resin compositions that are used to impregnate one or more fibrous layers and to overmold the one or more impregnated fibrous layers may show poor adhesion between the overmolded polymer and the surface of the component comprising the fibrous material, i.e. the composite structure. The poor adhesion may result in the formation of cracks at the interface of the overmolded composite structures leading to reduced mechanical properties, premature aging and problems related to delamination and deterioration of the article with use and time.

In such case of weak adhesion, the interface between the composite structure and the overmolding resin will break first, rendering the overmolded composite structure weaker than either of its components. Therefore, high adhesion strength between the components is highly desirable. However, once the bonding strength is high enough that the interface can sustain the applied load without being the first to break, yet higher mechanical performance of the structure is highly desirable as is needed for the most highly demanding applications. Lower mechanical performance in these most demanding applications may impair the durability and safety of the article upon use and time. Flexural strength, i.e. the maximum flexural stress sustained by the test specimen during a bending test, is commonly used as an indication of a material's ability to bear (or to sustain, or to support) load when flexed. When overmolding a resin composition onto at least a portion of a composite structure, high mechanical performance such as flexural strength of the structure is desired beyond that realized by good bonding strength between the composite structure and the overmolding resin.

There is a need for a thermoplastic polyamide composite structure that exhibits good mechanical properties, especially flexural strength and having at least a portion of its surface leading to good adhesion between the surface and an overmolding resin comprising a polyamide resin.

### SUMMARY OF THE INVENTION

Described herein is a composite structure having a surface, which surface has at least a portion made of a surface resin composition, and comprising a fibrous material selected from non-woven structures, textiles, unidirectional fiber, fibrous battings and combinations thereof, said fibrous material being impregnated with a matrix resin composition, wherein the matrix resin composition and the surface resin composition are independently selected from polyamide compositions comprising a blend of semi-aromatic polyamides. The matrix resin composition and the surface resin compositions are independently selected from polyamide compositions comprising a blend of a semi-aromatic semi-crystalline polyamide (A) with a semi-aromatic amorphous polyamide (B).

Further described herein is a process for making the composite structure of the invention, comprising a step of i) impregnating the fibrous material with the matrix resin composition, wherein at least a portion of the surface of the composite structure is made of the surface resin composition.

### DETAILED DESCRIPTION

The composite structure according to the present invention has improved impact resistance and flexural strength and allows a good adhesion when a part made of an overmolding resin composition comprising a thermoplastic polyamide is adhered onto at least a portion of the surface of the composite structure. A good impact resistance and flexural strenght of the composite structure and a good adhesion between the composite structure and the overmolding resin leads to structures exhibiting good resistance to deterioration and/or delamination of the structure with use and time.

Several patents and publications are cited in this description.

As used herein, the term "a" refers to one as well as to at least one and is not an article that necessarily limits its referent noun to the singular.

As used herein, the terms "about" and "at or about" are intended to mean that the amount or value in question may be the value designated or some other value about the same. The phrase is intended to convey that similar values promote equivalent results or effects according to the invention.

As used herein, the term "melting point" in reference to a polyamide refers to the melting point of the pure resin as determined with differential scanning calorimetry (DSC) at a scan rate of 10°C/min in the first heating scan, wherein the melting point is taken at the maximum of the endothermic peak. In customary measurements of melting behavior of blends of polymers, more than one heating scans may be performed on a single specimen, and the second and/or later scans may show a different melting behavior from the first scan. This different melting behavior may be observed as a shift in temperature of the maximum of the endothermic peak and/or as a broadening of the melting peak with possibly more than one peaks, which may be an effect of possible transamidation in the case of more than one polyamides. However, when selecting polyamides for in the scope of the current invention, always the peak of the melting endotherm of the first heating scan of the single polyamide is used. As used herein, a scan rate is an increase of temperature per unit time. Sufficient energy must be supplied to maintain a constant scan rate of 10°C/min until a temperature of at least 30°C and preferably at least 50°C above the melting point is reached.

The present invention relates to composite structures and processes to make them. The composite structure according to the present invention comprises a fibrous material that is impregnated with a matrix resin composition. At least a portion of the surface of the composite structure is made of a surface resin composition. The matrix resin composition and the surface resin composition may be identical or may be different.

As used herein, the term "a fibrous material being impregnated with a matrix resin composition" means that the matrix resin composition encapsulates and embeds the fibrous material so as to form an interpenetrating network of fibrous material substantially surrounded by the matrix resin composition. For purposes herein, the term "fiber" refers to a macroscopically homogeneous body having a high ratio of length to width across its cross-sectional area perpendicular to its length. The fiber cross section can be any shape, but is typically round. The fibrous material may be in any suitable form known to those skilled in the art and is preferably selected from non-woven structures, textiles, fibrous battings and combinations thereof. Non-woven structures can be selected from random fiber orientation or aligned fibrous structures. Examples of random fiber orientation include without limitation chopped and continuous material which can be in the form of a mat, a needled mat or a felt. Examples of aligned fibrous structures include without limitation unidirectional fiber strands, bidirectional strands, multidirectional strands, multi-axial textiles. Textiles can be selected from woven forms, knits, braids and combinations thereof. The fibrous material can be continuous or discontinuous in form. Depending on the end-use application of the composite structure and the required mechanical properties, more than one fibrous materials can be used, either by using several same fibrous materials or a combination of different fibrous materials, i.e. the composite structure according to the present invention may comprise one or more fibrous materials. An example of a combination of different fibrous materials is a combination comprising a non-woven structure such as for example a planar random mat which is placed as a central layer and one or more woven continuous fibrous materials that are placed as outside layers. Such a combination allows an improvement of the processing and thereof of the homogeneity of the composite structure thus leading to improved mechanical properties. The fibrous material may be made of any suitable material or a mixture of materials provided that the material or the mixture of materials withstand the processing conditions used during impregnation by the matrix resin composition and the surface resin composition.

Preferably, the fibrous material comprises glass fibers, carbon fibers, aramid fibers, graphite fibers, metal fibers, ceramic fibers, natural fibers or mixtures thereof; more preferably, the fibrous material comprises glass fibers, carbon fibers, aramid fibers, natural fibers or mixtures thereof; and still more preferably, the fibrous material comprises glass fibers, carbon fibers and aramid fibers or mixture mixtures thereof. By natural fiber, it is meant any of material of plant origin or of animal origin. When used, the natural fibers are preferably derived from vegetable sources such as for example from seed hair (e.g. cotton), stem plants (e.g. hemp, flax, bamboo; both bast and core fibers), leaf plants (e.g. sisal and abaca), agricultural fibers (e.g., cereal straw, corn cobs, rice hulls and coconut hair) or lignocellulosic fiber (e.g. wood, wood fibers, wood flour, paper and wood-related materials). As mentioned above, more than one fibrous materials can be used. A combination of fibrous materials made of different fibers can be used such as for example a composite structure comprising one or more central layers made of glass fibers or natural fibers and one or more surface layers made of carbon fibers or glass fibers. Preferably, the fibrous material is selected from woven structures, non-woven structures or combinations thereof, wherein said structures are made of glass fibers and wherein the glass fibers are E-glass filaments with a diameter between 8 and 30 microns and preferably with a diameter between 10 to 24 microns.

The fibrous material may further contain a thermoplastic material and the materials described above, for example the fibrous material may be in the form of commingled or co-woven yarns or a fibrous material impregnated with a powder made of a thermoplastic material that is suited to subsequent processing into woven or non-woven forms, or a mixture for use as a uni-directional material or a fibrous material impregnated with oligomers that will polymerize in situ during impregnation.

Preferably, the ratio between the fibrous material and the polymer materials in the composite structure, i.e. the fibrous material in combination with the matrix resin composition and the surface resin composition, is at least 30 volume percent fibrous material and more preferably between 40 and 60 volume percent fibrous material, the percentage being a volume-percentage based on the total volume of the composite structure.

The matrix resin composition and the surface resin composition are independently selected from polyamide compositions comprising a blend of semi-aromatic polyamides. Preferably, the matrix resin composition and the surface resin composition are independently selected from polyamide compositions comprising a blend of a semi-aromatic semi-crystalline polyamide (A) with a semi-aromatic amorphous polyamide (B).

The matrix resin composition and the surface resin composition may be the same or different.

Polyamides are condensation products of one or more dicarboxylic acids and one or more diamines, and/or one or more aminocarboxylic acids, and/or ring-opening polymerization products of one or more cyclic lactams. Polyamides may be fully aliphatic or semi-aromatic and are described hereafter.

The term "semi-aromatic" describes polyamides that comprise at least some monomers containing aromatic groups, in comparison with "fully aliphatic" polyamide which describes polyamides comprising aliphatic carboxylic acid monomer(s) and aliphatic diamine monomer(s). The one or more semi-aromatic polyamides may be derived from one or more aliphatic carboxylic acid components and aromatic diamine components such as for example m-xylylenediamine and p-xylylenediamine, it may be derived from one or more aromatic carboxylic acid components, such as terephthallic acid, and one or more aliphatic diamine components, it may be derived from mixtures of aromatic and aliphatic dicarboxylic acid components and mixtures of aromatic and aliphatic diamine components, it may be derived from mixtures of aromatic and aliphatic carboxylic acids and aliphatic diamines or aromatic diamines, it may be derived from aromatic or aliphatic carboxylic acids with mixtures of aliphatic and aromatic diamines.

Preferably, the one or more semi-aromatic polyamides are formed from one or more aromatic carboxylic acid components and one or more aliphatic diamine components. The one or more aromatic carboxylic acids can be, for example, terephthalic acid or mixtures of terephthalic acid and one or more other carboxylic acids, such as isophthalic acid, substituted phthalic acid such as for example 2-methylterephthalic acid and unsubstituted or substituted isomers of naphthalenedicarboxylic acid. Preferably, the one or more aromatic carboxylic acids are selected from terephthalic acid, isophthalic acid and mixtures thereof and more preferably, the one or more carboxylic acids are mixtures of terephthalic acid and isophthalic acid, wherein the mixture contains at least 55 mole-% of terephthalic acid. More preferably, the one or more carboxylic acids is 100% terephthalic acid. Furthermore, the one or more carboxylic acids can be mixed with one or more aliphatic carboxylic acids, like adipic acid; pimelic acid; suberic acid; azelaic acid; sebacic acid and dodecanedioic acid, adipic acid being preferred. More preferably the mixture of terephthalic acid and adipic acid comprised in the one or more carboxylic acids mixtures of the one or more semi-aromatic polyamide contains at least 55 mole-% of terephthalic acid. The one or more semi-aromatic polyamides described herein comprises one or more aliphatic diamines that can be chosen among diamines having four or more carbon atoms, including, but not limited to tetramethylene diamine, hexamethylene diamine, octamethylene diamine, decamethylene diamine, 2-methylpentamethylene diamine, 2-ethyltetramethylene diamine, 2-methyloctamethylene diamine; trimethylhexamethylene diamine, bis(p-aminocyclohexyl)methane; and/or mixtures thereof. Preferably, the one or more diamines of the one or more semi-aromatic polyamides described herein are selected from hexamethylene diamine, 2-methyl pentamethylene diamine and mixtures thereof, and more preferably the one or more diamines of the one or more semi-aromatic polyamides are selected from hexamethylene diamine and mixtures of hexamethylene diamine and 2-methyl pentamethylene diamine wherein the mixture contains at least 50 mole-% of hexamethylene diamine (the mole-% being based on the diamines mixture).

Examples of semi-aromatic polyamides useful in the polyamide composition described herein are commercially available under the trademark Zytel® HTN from E. I. du Pont de Nemours and Company, Wilmington, Delaware.

In a preferred embodiment, the matrix resin composition and the surface resin composition are independently selected from polyamide compositions comprising a blend of a semi-aromatic semi-crystalline polyamide (A) with a semi-aromatic amorphous polyamide (B).

The term "semi-crystalline" semi-aromatic polyamide refers to those polyamides which are partly crystalline as shown by the presence of an endotherm crystalline melting peak in a Differential Scanning Calorimeter ("DSC") measurement (ASTM D-3417), 10°C/minute heating rate.

Preferred semi-crystalline semi-aromatic polyamides (A) are selected from the group consisiting of poly(ε-caprolactam/tetramethylene terephthalamide) (PA6/4T), poly(ε-caprolactam/hexamethylene terephthalamide) (PA6/6T), poly(ε-caprolactam/decamethylene terephthalamide) (PA6/10T), poly(ε-caprolactam/dodecamethylene terephthalamide) (PA6/12T), poly(hexamethylene decanediamide/hexamethylene terephthalamide) (PA610/6T), poly(hexamethylene dodecanediamide/hexamethylene terephthalamide) (PA612/6T), poly(hexamethylene tetradecanediamide/hexamethylene terephthalamide) (PA614/6T), poly(ε-caprolactam/ hexamethylene isophthalamide/hexamethylene terephthalamide) (PA6/6I/6T), poly(2-methylpentamethylene hexanediamide/hexamethylene hexanediamide/hexamethylene terephthamide) (PA D6/66/ /6T), poly(hexamethylene terephthamide/2-methylpentamethylene terephthamide) (PA 6TDT), poly(hexamethylene hexanediamide/hexamethylene terephthamide (PA66/6T), poly(hexamethylene terephthamide/ hexamethylene isophthamide (PA6T/6I), poly(hexamethylene hexanediamide/hexamethylene terephthamide/ hexamethylene isophthamide (PA66/6T/6I), poly(decamethylene decanediamide/decamethylene terephthalamide) (PA1010/10T) poly(decamethylene decanediamide/dodecamethylene decanediamide/ decamethylene terephthalamide/dodecamethylene terephthalamide (PA1010/1210/10T/12T), poly(11-aminoundecanamide/tetramethylene terephthalamide) (PA11/4T), poly(11-aminoundecanamide/hexamethylene terephthalamide) (PA11/ 6T), poly(11-aminoundecanamide/decamethylene terephthalamide) (PA11/10T), poly(11-aminoundecanamide/dodecamethylene terephthalamide) (PA11/12T), poly(12-aminododecanamide/tetramethylene terephthalamide) (PA12/4T), poly(12-aminododecanamide/hexamethylene terephthalamide) (PA12/6T), poly(12-aminododecanamide/decamethylene terephthalamide) (PA12/10T), and poly(dodecamethylene dodecanediamide/dodecamethylene dodecanediamide/dodecamethylene terephthalamide)) (PA1212/12T). Particularly preferred semi-crystalline semi-aromatic polyamides (A) are selected from the group consisiting of poly(hexamethylene terephthamide/2-methylpentamethylene terephthamide) (PA 6TDT), poly(hexamethylene hexanediamide/hexamethylene terephthamide (PA66/6T), poly(hexamethylene terephthamide/ hexamethylene isophthamide (PA6T/6I), poly(hexamethylene hexanediamide/hexamethylene terephthamide/ hexamethylene isophthamide (PA66/6T/6I).

The term "amorphous" semi-aromatic polyamide refers to those polyamides which are lacking in crystallinity as shown by the lack of an endotherm crystalline melting peak in a Differential Scanning Calorimeter ("DSC") measurement (ASTM D-3417), 10°C/minute heating rate.

Preferred amorphous semi-aromatic polyamides (B) comprise isophthalic acid as aromatic carboxylic acids, wherein the amount of isophtalic acid in the semi-crystalline semi-aromatic polyamide is at least 60 mole-%.

Examples of amorphous semiaromatic polyamides (B) that are also known as transparent semiaromatic polyamides can be found in M.I. Kohan Nylon plastics handbook, Hanser, Munich (1995), page 377 to 380). Preferred amorphous semiaromatic polyamides (B) are selected from the group consisting of poly(hexamethylene terephthamide/ hexamethylene isophthamide (PA6T/6I), poly(hexamethylene hexanediamide/hexamethylene terephthamide/ hexamethylene isophthamide (PA66/6T/6I) wherein the amount of isophtalic acid in the semi-crystalline semi-aromatic polyamide is at least 60 mole-%. Particularly preferred amorphous semiaromatic polyamides (B) are poly(hexamethylene terephthamide/ hexamethylene isophthamide (PA6T/6I) in a molar ratio 6T:6I of approximatively 30:70.

The matrix and the surface resin compositions described herein comprises a blend of semi-aromatic polyamides. Preferably, the matrix resin composition and the surface resin composition are selected from polyamide compositions comprising a blend of a semi-aromatic semi-crystalline polyamide (A) with a semi-aromatic amorphous polyamide (B) wherein semi-aromatic semi-crystalline polyamide (A) is preferably selected from the group consisting of PA66/6T, PA6TDT, PA6I/6T PA66/6I/6T wherein the amount of terephtalic acid in the semi-crystalline semi-aromatic polyamide (A) is at least 55 mole-%and their combinations and copolymers thereof, and wherein the semi-aromatic amorphous polyamide (B) is selected from the group consisting of PA6I/6T and PA66/6T/6I wherein the amount of isophtalic acid in the amorphous semi-aromatic polyamide is at least 60 mole-% and their combinations and copolymers thereof.

The matrix and the surface resin compositions described herein comprises a blend of semi-aromatic polyamides. Preferably, the matrix resin composition and the surface resin composition are selected from polyamide compositions comprising a blend of a semi-aromatic semi-crystalline polyamide (A) with a semi-aromatic amorphous polyamide (B) in a weight ratio (A:B) from about 99:1 to about 5:95, more preferably from about 97:3 to about 50:50 and still more preferably from about 95:5 to about 65:35.

The surface resin composition described herein and/or the matrix resin composition may further comprise one or more impact modifiers, one or more heat stabilizers, one or more oxidative stabilizers, one or more ultraviolet light stabilizers, one or more flame retardant agents or mixtures thereof.

The surface resin composition described herein and/or the matrix resin composition may further comprise one or more reinforcing agents such as glass fibers, glass flakes, carbon fibers, carbon nanotubes, mica, wollastonite, calcium carbonate, talc, calcined clay, kaolin, magnesium sulfate, magnesium silicate, boron nitride, barium sulfate, titanium dioxide, sodium aluminum carbonate, barium ferrite, and potassium titanate. When present, the one or more reinforcing agents are present in an amount from at or about 1 to at or about 60 wt-%, preferably from at or about 1 to at or about 40 wt-%, or more preferably from at or about 1 to at or about 35 wt-%, the weight percentages being based on the total weight of the surface resin composition or the matrix resin composition, as the case may be.

As mentioned above, the matrix resin composition and the surface resin composition may be identical or different. With the aim of increasing the impregnation rate of the fibrous material, the melt viscosity of the compositions may be reduced and especially the melt viscosity of the matrix resin composition.

The surface resin composition described herein and/or the matrix resin composition and/or the overmolding resin composition may further comprise modifiers and other ingredients, including, without limitation, flow enhancing additives, lubricants, antistatic agents, coloring agents (including dyes, pigments, carbon black, and the like), nucleating agents, crystallization promoting agents and other processing aids known in the polymer compounding art.

Fillers, modifiers and other ingredients described above may be present in the composition in amounts and in forms well known in the art, including in the form of so-called nano-materials where at least one of the dimensions of the particles is in the range of 1 to 1000 nm.

Preferably, the surface resin compositions and the matrix resin compositions are melt-mixed blends, wherein all of the polymeric components are well-dispersed within each other and all of the non-polymeric ingredients are well-dispersed in and bound by the polymer matrix, such that the blend forms a unified whole. Any melt-mixing method may be used to combine the polymeric components and non-polymeric ingredients of the present invention. For example, the polymeric components and non-polymeric ingredients may be added to a melt mixer, such as, for example, a single or twin-screw extruder; a blender; a single or twin-screw kneader; or a Banbury mixer, either all at once through a single step addition, or in a stepwise fashion, and then melt-mixed. When adding the polymeric components and non-polymeric ingredients in a stepwise fashion, part of the polymeric components and/or non-polymeric ingredients are first added and melt-mixed with the remaining polymeric components and non-polymeric ingredients being subsequently added and further melt-mixed until a well-mixed composition is obtained.

Depending on the end-use application, the composite structure according to the present invention may have any shape. In a preferred embodiment, the composite structure according to the present invention is in the form of a sheet structure. The first component may be flexible, in which case it can be rolled.

In another aspect, the present invention relates to a process for making the composite structures described above and the composite structures obtained thereof. The process for making a composite structure having a surface comprises a step of i) impregnating the fibrous material with the matrix resin composition, wherein at least a portion of the surface of the composite structure is made of the surface resin composition. Preferably, the fibrous material is impregnated with the matrix resin by thermopressing. During thermopressing, the fibrous material, the matrix resin composition and the surface resin composition undergo heat and pressure in order to allow the resin compositions to melt and penetrate through the fibrous material and, therefore, to impregnate said fibrous material.

Typically, thermopressing is made at a pressure between 2 and 100 bars and more preferably between 10 and 40 bars and a temperature which is above the melting point of the matrix resin composition and the surface resin composition, preferably at least about 20°C above the melting point to enable a proper impregnation. Heating may be done by a variety of means, including contact heating, radiant gas heating, infra red heating, convection or forced convection air heating, induction heating, microwave heating or combinations thereof.

The impregnation pressure can be applied by a static process or by a continuous process (also known as dynamic process), a continuous process being preferred for reasons of speed. Examples of impregnation processes include without limitation vacuum molding, in-mold coating, cross-die extrusion, pultrusion, wire coating type processes, lamination, stamping, diaphragm forming or press-molding, lamination being preferred. During lamination, heat and pressure are applied to the fibrous material, the matrix resin composition and the surface resin composition through opposing pressured rollers or belts in a heating zone, preferably followed by the continued application of pressure in a cooling zone to finalize consolidation and cool the impregnated fibrous material by pressurized means. Examples of lamination techniques include without limitation calendering, flatbed lamination and double-belt press lamination. When lamination is used as the impregnating process, preferably a double-belt press is used for lamination.

The matrix resin composition and the surface resin composition are applied to the fibrous material by conventional means such as for example powder coating, film lamination, extrusion coating or a combination of two or more thereof, provided that the surface resin composition is applied on at least a portion of the surface of the composite structure, which surface is exposed to the environment of the composite structure.

During a powder coating process, a polymer powder which has been obtained by conventional grinding methods is applied to the fibrous material. The powder may be applied onto the fibrous material by scattering, sprinkling, spraying, thermal or flame spraying, or fluidized bed coating methods. Optionally, the powder coating process may further comprise a step which consists in a post sintering step of the powder on the fibrous material. The matrix resin composition and the surface resin composition are applied to the fibrous material such that at least a portion of the surface of the composite structure is made of the surface resin composition. Subsequently, thermopressing is performed on the powder coated fibrous material, with an optional preheating of the powder coated fibrous material outside of the pressurized zone.

During film lamination, one or more films made of the matrix resin composition and one or more films made of the surface resin composition which have been obtained by conventional extrusion methods known in the art such as for example blow film extrusion, cast film extrusion and cast sheet extrusion are applied to the fibrous material, e.g. by layering. Subsequently, thermopressing is performed on the assembly comprising the one or more films made of the matrix resin composition and the one or more films made of the surface resin composition and the one or more fibrous materials. In the resulting composite structure, the films melt and penetrate around the fibrous material as a polymer continuum surrounding the fibrous material.

During extrusion coating, pellets and/or granulates made of the matrix resin composition and pellets and/or granulates made of the surface resin composition are melted and extruded through one or more flat dies so as to form one or more melt curtains which are then applied onto the fibrous material by laying down the one or more melt curtains. Subsequently, thermopressing is performed on the assembly comprising the matrix resin composition, the surface resin composition and the one or more fibrous materials.

Depending on the end-use application, the composite structure obtained under step i) may be shaped into a desired geometry or configuration, or used in sheet form. The process for making a composite structure according to the present invention may further comprise a step ii) of shaping the composite structure, said step arising after the impregnating step i). The step of shaping the composite structure obtained under step i) may be done by compression molding, stamping or any technique using heat and/or pressure. Preferably, pressure is applied by using a hydraulic molding press. During compression molding or stamping, the composite structure is preheated to a temperature above the melt temperature of the surface resin composition and is transferred to a forming or shaping means such as a molding press containing a mold having a cavity of the shape of the final desired geometry whereby it is shaped into a desired configuration and is thereafter removed from the press or the mold after cooling to a temperature below the melt temperature of the surface resin composition and preferably below the melt temperature the matrix resin composition.

The composite structures of the invention are particularly suited to be overmoulded with an overmoulding resin composition that is selected from polyamide compositions.

The composite structures according to the present invention may be used in a wide variety of applications such as for example as components for automobiles, trucks, commercial airplanes, aerospace, rail, household appliances, computer hardware, hand held devices, recreation and sports, structural component for machines, structural components for buildings, structural components for photovoltaic equipments or structural components for mechanical devices.
Examples of automotive applications include without limitation seating components and seating frames, engine cover brackets, engine cradles, suspension arms and cradles, spare tire wells, chassis reinforcement, floor pans, front-end modules, steering column frames, instrument panels, door systems, body panels (such as horizontal body panels and door panels), tailgates, hardtop frame structures, convertible top frame structures, roofing structures, engine covers, housings for transmission and power delivery components, oil pans, airbag housing canisters, automotive interior impact structures, engine support brackets, cross car beams, bumper beams, pedestrian safety beams, firewalls, rear parcel shelves, cross vehicle bulkheads, pressure vessels such as refrigerant bottles and fire extinguishers and truck compressed air brake system vessels, hybrid internal combustion/electric or electric vehicle battery trays, automotive suspension wishbone and control arms, suspension stabilizer links, leaf springs, vehicle wheels, recreational vehicle and motorcycle swing arms, fenders, roofing frames and tank flaps.

Examples of household appliances include without limitation washers, dryers, refrigerators, air conditioning and heating. Examples of recreation and sports include without limitation inline-skate components, baseball bats, hockey sticks, ski and snowboard bindings, rucksack backs and frames, and bicycle frames. Examples of structural components for machines include electrical/electronic parts such as for example housings for hand held electronic devices, computers.

### EXAMPLES

The following materials were used for preparing the composites structures according to the present invention and comparative examples.

### Materials

The materials below are comprised in the compositions used in the Examples and Comparative Examples.
Polyamide 1 (PA1): a polyamide made of terephtalic acid and 1,6-hexamethylenediamine (HMD) and 2-methylpentamethylenediamine (MPMD) (HMD:MPMD = 50:50). PA1 has a melting point of about 297°C to about 303°C and a glass transition temperature of about 130 °C to about 145 °C. This semi-aromatic polyamide is called PA6TDT and is commercially available from E. I. du Pont de Nemours and Company, Wilmington, Delaware.
Polyamide 2 (PA2): a polyamide made of terephtalic acid, isophthalic acid, and 1,6-hexamethylenediamine. This semi-aromatic polyamide has a glass transition temperature of about 120 °C to about 130 °C. PA2 is called PA6I6T and is commercially available from E. I. du Pont de Nemours and Company.

### Preparation of films

The resin compositions used in the Examples (abbreviated as "E" in Tables 1 and 2), and Comparative Examples (abbreviated as "C" in Tables 1 and 2) were prepared by melting or melt-blending the ingredients in a twin-screw extruder. Upon exiting the extruder, the compositions listed in Tables 1 and 2 were cast into films by exiting the extruder through an adaptor and a film die at about 325°C and cast onto a casting drum oil-heated at 120°C, then drawn in air and wound around a core at room temperature. The matrix and surface resin compositions were made into about 102 micron thick films. The thickness of the films was controlled by the rate of drawing. The films are described in Table 3.

### Preparation of the composite structures

The composite structures E1 to E4, and C1 to C3 were made by laminating multiple layers of film of compositions shown in Tables 1 and 2, and woven continuous glass fiber textile (prepared from E-glass fibers having a diameter of 17 microns, sized with 0.4% of a silane-based sizing agent and a nominal roving tex of 1200 g/km that have been woven into a 2/2 twill (balanced weave) with an areal weight of 600 g/m²). The lamination sequence for the composite structures E1 to E4 and C1 and C2 was as follows: 4 layers of film of surface resin composition, one layer of woven continuous glass fiber textile, 6 layers of film of matrix resin composition, one layer of woven continuous glass fiber textile, 4 layers of film of surface resin composition. The lamination sequence for the composite structure C3 was as follows: 2 layers of film of surface resin composition, 2 layers of film of matrix resin composition, one layer of woven continuous glass fiber textile, 6 layers of film of matrix resin composition, one layer of woven continuous glass fiber textile, 2 layers of film of matrix resin composition, 2 layers of film of surface resin composition.

The composite structures were compression molded by a Dake Press (Grand Haven, Mich) Model 44-225, Pressure range 0 - 25K, with an 8 inch platten. A 6x6" specimen of film and glass textile layers as described above was placed in the mold and heated to a temperature of about 340°C. Once at temperature, the composite structures E1 to E3 and C1 were held at the temperature for 2 minutes without pressure, then pressed at the 340°C temperature with the following pressures: about 4 bar for about 2 minutes, then with about 12 bar pressure for about 2 additional minutes, and then with about 19 bar pressure for about 2 additional minutes, and subsequently cooled to ambient temperature. The composite structures E4 and C2 and C3 were held at the temperature for 2 minutes without pressure, then pressed at the 340°C temperature with the following pressures: about 4 bar for about 2 minutes, then with about 23 bar pressure for about 2 additional minutes, and then with about 46 bar pressure for about 2 additional minutes, and subsequently cooled to ambient temperature. All the composite structures had an overall thickness of about 1.5 mm.

### Multiaxial Impact (Dynatup) Total Energy Table 1

High Speed Puncture Multiaxial Impact test measures the total energy that a test specimen can absorb before breaking when struck by a load dropped onto the specimen at high speed. One such typical test speed used is 2.2 mm/sec, which is equal to 5 mph. This test can differentiate specimens based on their impact resistance, which is often used as a measure of ductility of the test specimen.

The composite structures of Examples E1 to E3 and Comparative Example C1 obtained as described above were cut into about 3" (about 76 mm) by about 3" (about 76 mm) square test specimens using a MK-377 Tile Saw with a diamond edged blade and water as a lubricant. High Speed Puncture Multiaxial Impact (Dynatup Impact) was tested on the test specimens via the apparatus and geometry of ASTM method D 3763, which provides a testing platform onto which the specimen is clamped (support "ring") exposing a testing surface, and a "tup" which contains the impact head and the load cell. In the test, the specimens were tested with an 1 1/4 inch ring and a 1/2 " hemispherical tup and a 10,000 lb load. With the specimen clamped onto the testing platform, the tup was raised to the appropriate height and was released so it impacted at about the center of the specimen at 2.2 mm/sec. A load-deflection curve was produced and the total energy absorbed by the specimen before failure (before it was caused to break by the impact) was recorded. The results are shown in Table 1.

It is seen in Table 1 that the examples E1 to E3 exhibit higher total energy to failure than comparative example C1, demonstrating the higher impact resistance of the composite structure made of a combination of at least 2 semi-aromatic polyamides in both the matrix resin composition and in the surface resin composition, than a composite structure made of a single semiaromatic polyamide in both the matrix resin composition and in the surface resin composition.

### Flexural Strength of Composite Structures of Tables 1 and 2

The composite structures E1 and E2 and Comparative Example C1 in Table 1, and composite structures E4 and C2 and C3 in Table 2 obtained as described above were cut into 1/2" (about 12.7 mm) by 3" (about 76 mm) long test specimens (bars) using a MK-377 Tile Saw with a diamond edged blade and water as a lubricant. Flexural Strength was tested on the test specimens via a 3-point bend test. The apparatus and geometry were according to ISO method 178, bending the specimen with a 2.0" support width with the loading edge at the center of the span. The composite structure was resting on the two side supports (at 2" apart), while indenting with the single support (the load). The tests were conducted with 1 KN load at 2 mm/min until 2% strain in the case of E1, E2, and C1, and until fracture in the case of E4, C2, and C3. The results are shown in Tables 1 and 2.

It is seen in Table 1 that the examples E1 and E2 exhibit higher flexural strength than comparative example C1, demonstrating the higher strength of the composite structure made of a combination of at least 2 semi-aromatic polyamides in both the matrix resin composition and in the surface resin composition, than a composite structure made of a single semiaromatic polyamide in both the matrix resin composition and in the surface resin composition.

It is seen in Table 2 that the example E4 exhibits higher flexural strength than comparative examples C2 and C3, demonstrating the higher strength of the composite structure made of a combination of at least 2 semi-aromatic polyamides in both the matrix resin composition and in the surface resin composition, than a composite structure made of at least 2 semi-aromatic polyamides only in the surface resin composition, or a composite structure made of a single semiaromatic polyamide in both the matrix resin composition and in the surface resin composition.

**Table 1**

| | C1 | E1 | E2 | E3 |
|---|---|---|---|---|
| Matrix Resin Composition | | | | |
| PA1 | 100 | 95 | 70 | 90 |
| PA2 | | 5 | 30 | 10 |
| Surface Resin Composition | | | | |
| PA1 | 100 | 95 | 70 | 90 |
| PA2 | | 5 | 30 | 10 |

| ISO-178 3 Point Flex | | | | |
|---|---|---|---|---|
| Flex Strength at 2% strain (Mpa) | 86 | 165 | 152 | |
| | | | | |

| Dynatup - ASTM D 3763 1 1/4 inch ring 1/2 inch tup 2.2 mm/sec | | | | |
|---|---|---|---|---|
| Total Energy (J) | 10.6 | 11.8 | 13.1 | 12.5 |

**Table 2**

| | C2 | C3 | E4 |
|---|---|---|---|
| Matrix Resin Composition | | | |
| PA1 | 100 | 100 | 90 |
| PA2 | | | 10 |

| Surface Resin Composition | | | |
|---|---|---|---|
| PA1 | 100 | 90 | 90 |
| PA2 | | 10 | 10 |

| ISO-178 3 Point Flex | | | |
|---|---|---|---|
| Flex Strength at break (Mpa) | 386 | 305 | 444 |

**Table 3**

| | Film C1 | Film E1 | Film E2 | Film E3 |
|---|---|---|---|---|
| PA1 | 100 | 95 | 70 | 90 |
| PA2 | | 5 | 30 | 10 |
| Tear Strength (LbF) | | | | |
| | 17.74 | | 19.18 | |

| ISO- Tensile Test | | | | |
|---|---|---|---|---|
| Tensile Strength at break (Psi) | 7065 | 9612 | 10007 | 7884 |

## Claims

1. A composite structure having a surface, which surface has at least a portion made of a surface resin composition, and comprising a fibrous material selected from the group consisting of non-woven structures, textiles, fibrous battings and combinations thereof, said fibrous material being impregnated with a matrix resin composition, wherein the matrix resin composition and the surface resin composition are independently selected from polyamide compositions comprising a blend of a semi-aromatic semi-crystalline polyamide (A) with a semi-aromatic amorphous polyamide (B).

2. The composite structure according to claims 1, wherein the fibrous material is made of glass fibers, carbon fibers, aramid fibers, natural fibers or mixtures thereof.

3. The composite structure according to claim 2, wherein the fibrous material is made of glass fibers.

4. The composite structure according to any of the preceding claims wherein the fibrous material is from 30 volume percent to 60 volume percent of the composite structure.

5. The composite structure according to any preceding claim, wherein the weight ratio (A:B) of the polyamides selected from polyamides (A) and the polyamides (B) of the polyamide composition is between from 99:1 to 5:95.

6. The composite structure according to any of the preceding claims further comprising one or more additives selected from the group consisting of heat stablizers, oxidative stabilizers, reinforcing agents and flame retardants or combination thereof.

7. The composite structure according to any of the preceding claims wherein the semi-aromatic polyamides are selected from the group consisting of PA6/4T, PA6/6T, PA6/10T, PA6/12T, PA610/6T, PA612/6T, PA614/6T, PA6/6I/6T, PA D6/66/ /6T, PA 6TDT, PA1010/10T, PA1010/1210/10T/12T, PA11/4T, PA11/6T, PA11/10T, PA11/12T, PA12/4T, PA12/6T, PA12/10T PA1212/12T, PA66/6T, PA6I/6T, PA66/61/6T, and PA6T/6I.

8. The composite structure according to any of the preceding claims wherein the one or more semi-aromatic semi-crystalline polyamides are selected form the group consisting of PA66/6T, PA6TDT, PA6I/6T, PA66/6I/6T and their combinations and copolymers thereof, and wherein the semi-aromatic amorphous polyamide (B) is selected from the group consisting of PA6I/6T and PA66/6T/6I wherein the amount of isophtalic acid in the amorphous semi-aromatic polyamide is at least 60 mole-% and their combinations and copolymers thereof.

9. The composite structure according to any preceding claim in the form of a sheet structure.

10. The composite structure according to any preceding claim in the form of a component for automobiles, trucks, commercial airplanes, aerospace, rail, household appliances, computer hardware, hand held devices, recreation and sports, structural component for machines, structural components for buildings, structural components for photovoltaic equipments or structural components for mechanical devices.

11. A process for making a composite structure having a surface, said process comprises a step of:
i) impregnating with a matrix resin composition a fibrous material selected from non-woven structures, textiles, fibrous battings and combinations thereof, said fibrous material being impregnated with a matrix resin composition, wherein at least a portion of the surface of the composite structure is made of a surface resin composition, and
wherein the matrix polyamide resin composition and the surface resin composition is selected from polyamide compositions comprising a blend of a semi-aromatic semi-crystalline polyamide (A) with a semi-aromatic amorphous polyamide (B).

12. The process according to claim 11 further comprising a step ii) of shaping the composite structure, said step arising after step i).

## Patentansprüche

1. Verbundstruktur, die eine Oberfläche aufweist, welche Oberfläche mindestens einen Teil aufweist, der aus einer Oberflächenharzzusammensetzung hergestellt ist, und ein faseriges Material umfasst ausgewählt aus der Gruppe bestehend aus Vliesstoffstrukturen, Textilien, faserigen Wattierungen und Kombinationen davon, wobei das faserige Material mit einer Matrixharzzusammensetzung imprägniert ist, wobei die Matrixharzzusammensetzung und die Oberflächenharzzusammensetzung unabhängig aus Polyamidzusammensetzungen ausgewählt sind, die eine Mischung eines halbaromatischen, halbkristallinen Polyamids (A) mit einem halbaromatischen, amorphen Polyamid (B) umfasst.

2. Verbundstruktur nach Anspruch 1, wobei das faserige Material aus Glasfasern, Kohlenstofffasern, Aramidfasern, Naturfasern oder Mischungen davon hergestellt ist.

3. Verbundstruktur nach Anspruch 2, wobei das faserige Material aus Glasfasern hergestellt ist.

4. Verbundstruktur nach irgendeinem der vorhergehenden Ansprüche, wobei das faserige Material 30 Volumenprozent bis 60 Volumenprozent der Verbundstruktur ausmacht.

5. Verbundstruktur nach irgendeinem vorhergehenden Anspruch, wobei das Gewichtsverhältnis (A:B) der Polyamide, die aus den Polyamiden (A) und den Polyamiden (B) der Polyamidzusammensetzung ausgewählt sind, 99:1 bis 5:95 beträgt.

6. Verbundstruktur nach irgendeinem der vorhergehenden Ansprüche, ferner ein oder mehrere Zusatzmittel umfassend ausgewählt aus der Gruppe bestehend aus Wärmestabilisatoren, oxidativen Stabilisatoren, Verstärkungsmitteln und Flammenschutzmitteln oder Kombinationen davon

7. Verbundstruktur nach irgendeinem der vorhergehenden Ansprüche, wobei die halbaromatischen Polyamide aus der Gruppe ausgewählt sind bestehend aus PA6/4T, PA6/6T, PA6/10T, PA6/12T, PA610/6T, PA612/6T, PA614/6T, PA6/6I/6T, PAD6/66//6T, PA6TDT, PA1010/10T, PA1010/1210/10T/12T, PA11/4T, PA11/6T, PA11/10T, PA11/12T, PA12/4T, PA12/6T, PA12/10T, PA1212/12T, PA66/6T, PA6I/6T, PA66/6I/6T und PA6T/6I.

8. Verbundstruktur nach irgendeinem der vorhergehenden Ansprüche, wobei das eine oder die mehreren halbaromatischen, halbkristallinen Polyamide aus der Gruppe ausgewählt sind bestehend aus PA66/6T, PA6TDT, PA6I/6T, PA66/6I/6T und ihren Kombinationen und Copolymeren davon und wobei das halbaromatische amorphe Polyamid (B) aus der Gruppe ausgewählt ist bestehend aus PA6I/6T und PA66/6T/6I, wobei die Menge an Isophthalsäure in dem amorphen halbaromatischen Polyamid mindestens 60 Mol-% beträgt, und ihren Kombinationen und Copolymeren davon.

9. Verbundstruktur nach irgendeinem vorhergehenden Anspruch in Form einer Plattenstruktur.

10. Verbundstruktur nach irgendeinem vorhergehenden Anspruch in Form einer Komponente für Fahrzeuge, Lastwagen, Verkehrsflugzeuge, Luft- und Raumfahrt, Eisenbahn, Haushaltgeräte, Computer-Hardware, Handheld-Geräte, Erholungs- und Sportartikel, Bauteile für Maschinen, Bauteile für Gebäude, Bauteile für photovoltaische Geräte oder Bauteile für mechanische Vorrichtungen.

11. Verfahren zum Herstellen einer Verbundstruktur, die eine Oberfläche aufweist, wobei das Verfahren einen Schritt umfasst des:
i) Imprägnierens, mit einer Matrixharzzusammensetzung, eines faserigen Materials ausgewählt unter Vliesstoffstrukturen, Textilien, faserigen Wattierungen und Kombinationen davon, wobei das faserige Material mit einer Matrixharzzusammensetzung imprägniert wird,
wobei mindestens ein Teil der Oberfläche der Verbundstruktur aus einer Oberflächenharzzusammensetzung hergestellt ist, und
wobei die Matrixpolyamidharzzusammensetzung und die Oberflächenharzzusammensetzung aus Polyamidzusammensetzungen ausgewählt sind, die eine Mischung eines halbaromatischen, halbkristallinen Polyamids (A) mit einem halbaromatischen amorphen Polyamid (B) umfasst.

12. Verfahren nach Anspruch 11, ferner einen Schritt ii) des Gestaltens der Verbundstruktur umfassend, wobei der Schritt nach Schritt i) erfolgt.

## Revendications

1. Structure composite ayant une surface, laquelle surface présente au moins une partie constituée d'une composition de résine de surface, et comprenant un matériau fibreux sélectionné dans le groupe constitué des structures non-tissées, des textiles, des nappes fibreuses et de leurs combinaisons, ledit matériau fibreux étant imprégné d'une composition de résine formant matrice, la composition de résine formant matrice et la composition de résine de surface étant indépendamment sélectionnées parmi les compositions de polyamide comprenant un mélange d'un polyamide semi-cristallin semi-aromatique (A) avec un polyamide amorphe semi-aromatique (B).

2. Structure composite selon la revendication 1, le matériau fibreux étant constitué de fibres de verre, de fibres de carbone, de fibres d'aramide, de fibres d'origine naturelle ou des mélanges de celles-ci.

3. Structure composite selon la revendication 2, le matériau fibreux étant constitué de fibres de verre.

4. Structure composite selon l'une quelconque des revendications précédentes, le matériau fibreux représentant 30 pour cent en volume à 60 pour cent en volume de la structure composite.

5. Structure composite selon l'une quelconque des revendications précédentes, le rapport en poids (A:B) des polyamides sélectionnés parmi les polyamides (A) et les polyamides (B) de la composition de polyamide étant compris entre 99:1 à 5:95.

6. Structure composite selon l'une quelconque des revendications précédentes comprenant en outre un ou plusieurs additifs sélectionnés dans le groupe constitué des stabilisants thermiques, des agents de résistance à l'oxydation, des agents de renfort et des agents ignifuges ou de leurs combinaisons.

7. Structure composite selon l'une quelconque des revendications précédentes, les polyamides semi-aromatiques étant sélectionnés dans le groupe constitué de PA6/4T, PA6/6T, PA6/10T, PA6/12T, PA610/6T, PA612/6T, PA614/6T, PA6/6I/6T, PAD6/66//6T, PA6TDT, PA1010/10T, PA1010/1210/10T/12T, PA11/4T, PA11/6T, PA11/10T, PA11/12T, PA12/4T, PA12/6T, PA12/10T, PA1212/12T, PA66/6T, PA6I/6T, PA66/6I/6T, et PA6T/6I.

8. Structure composite selon l'une quelconque des revendications précédentes, le ou les polyamides semi-cristallins semi-aromatiques étant sélectionnés dans le groupe constitué de PA66/6T, PA6TDT, PA6I/6T, PA66/6I/6T et de leurs combinaisons et de leurs copolymères, et le polyamide amorphe semi-aromatique (B) étant sélectionné dans le groupe constitué de PA6I/6T et PA66/6T/6I, la quantité d'acide isophtalique dans le polyamide amorphe semi-aromatique étant au moins de 60 % en mole et leurs combinaisons et leurs copolymères.

9. Structure composite selon l'une quelconque des revendications précédentes se présentant sous la forme d'une structure en feuille.

10. Structure composite selon l'une quelconque des revendications précédentes se présentant sous la forme d'un composant pour automobiles, camions, aéronefs commerciaux, véhicule aérospatial, ferroviaire, appareils ménagers, appareil informatique, dispositifs portatifs, de loisirs et de sports, composant structurel pour les machines, composants structurels pour les bâtiments, composants structurels pour les équipements photovoltaïques ou composants structurels pour dispositifs mécaniques.

11. Procédé de fabrication d'une structure composite présentant une surface, ledit procédé comprenant une étape de:
i) imprégnation avec une composition de résine formant matrice d'un matériau fibreux sélectionné parmi les structures non-tissées, les textiles, les nappes fibreuses et leurs combinaisons, ledit matériau fibreux étant imprégné d'une composition de résine formant matrice,
où au moins une partie de la surface de la structure composite est constituée d'une composition de résine de surface, et
la composition de résine de polyamide formant matrice et la composition de résine de surface étant sélectionnées parmi les compositions de polyamide comprenant un mélange d'un polyamide semi-cristallin semi-aromatique (A) avec un polyamide amorphe semi-aromatique (B).

12. Procédé selon la revendication 11 comprenant en outre une étape ii) de mise en forme de la structure composite, ladite étape survenant après l'étape i).
